# EUROPÄISCHE PATENTANMELDUNG

(11) **EP 0 692 573 A1**
(43) Veröffentlichungstag der Anmeldung: **17.01.1996**
(21) Anmeldenummer: 94111059.5
(22) Anmeldetag: 15.07.1994
(51) Int. Cl.: E01C 13/08, E02B 11/00, A01G 25/06

(54) **Kulturflächen-Anordnung und Verfahren zu deren Versorgung, insbesondere Bewässerung**

(71) Anmelder: Karl, Günther, D-94548 Innernzell (DE)
(72) Erfinder: Karl, Günther, D-94548 Innernzell (DE)
(74) Vertreter: Hanke, Hilmar

(57) **Zusammenfassung**

2.1 Bekannte Kulturflächen-Anordnungen wie Fußballplätze oder dergleichen weisen ein Drainagesystem auf, welches zuviel der Kulturfläche zugeführte Wasser ins Abwassernetz leitet.

2.2. Es wird vorgeschlagen, unmittelbar unter der Kulturfläche (1) einen großflächigen, etwa der Größe der Kulturfläche entsprechenden Wasserspeicher (2) anzuordnen, welcher zugeführtes Wasser (4) speichert und die Kulturfläche (1) von unten mit Wasser versorgt, wobei die Kulturfläche nach Wasserentleerung des Speichers (2) auch belüftet werden kann.

## Beschreibung

Die Erfingung betrifft ein Verfahren zur Versorgung von horizontalen planen Kulturflächen, insbesondere Bewässerung von Rasen-Sportanlagen für Fußball, Golf od. dgl., wobei der Kulturfläche bedarfsweise Wasser zugeführt wird, sowie eine nach diesem Verfahren versorgte Kulterflächen-Anordnung selbst.

Bekannte Grünflächen von Fußballplätzen, Tennis, Golf oder dergleichen unterliegen durch Betreiben der Sportart einer enormen Belastung und bedürfen einer aufwendigen Pflege, insbesondere durch Bewässerung. Bei Ausbleiben des natürlichen Regens werden die Grünflächen künstlich beregnet. Das der Grünfläche von oben zugeführte Wasser versorgt den Rasen, durchdringt den Rasen und wird über ein besonderes Drainagesystem unter dem Rasen in einem externen Ablaufsystem, beispielsweise einem Vorfluter wieder abgeführt. Das Drainagesystem ist notwendig, um bei starkem Regen den Fußballplatz oder dergleichen nicht zu überfluten und schnell wieder bespielbar zu machen. Das zuviel zugeführte Wasser wird hierbei relativ schnell wieder abgeführt.

Von Nachteil ist, daß das Drainagesystem beispielsweise eines Fußballplatzes sehr aufwendig zu installieren und entsprechend kostenintensiv ist. Im Abstand von ca. 6 m sind in Längsrichtung des Fußballfeldes Drainage-Gräben gezogen, in denen Sickerrohre verlegt sind. Der Raum zwischen zwei parallelen Drainage-Gräben ist dachartig aufgebaut, wenn auch mit geringer Neigung, so daß das Wasser einerseits vom "Dach" in den Graben, und von dort in den Sickerrohren in das externe Ablaufsystem ablaufen kann. Dachaufbau und die Vielzahl der Drainage-Gräben stellen eine nicht plane Oberfläche dar, welche die besondere Schwierigkeit der Installierung ausmacht.

Ein weiterer wesentlicher Nachteil ist, daß bei Ausbleiben des natürlichen Regens der Fußballplatz relativ oft künstlich beregnet werden, also aufwendig durch Bedienungspersonen gepflegt werden muß. Schließlich ist auch die verbrauchte Wassermenge enorm, weshalb man bestrebt ist, den Platz eben weniger oft künstlich zu beregnen, worunter die Rasenqualität wieder leidet.

Aufbauend auf vorgenanntem Stand der Technik ist es Aufgabe der Erfindung, ein Verfahren und eine Kulturflächen-Anordnung dereingangs genannten Art zu schaffen, wobei bei vergleichsweise geringem Installationaufwand eine einfache, verbraucherfreundliche und gleichwohl effektive Kulturflächen-Versorgung, insbesondere Bewässerung, ermöglicht wird.

Gelöst wird die der Erfindung zugrundeliegende Aufgabe durch das im Anspruch 1 angegebene Versorgungsverfahren.

Vorteilhaft weitergebildet wird das Versorgungsverfahren durch die Merkmale der Unteransprüche 2 bis 8.

Gelöst wird die der Erfindung zugrundeliegende Aufgabe auch durch eine Kulturflächen-Anordnung der im Anspruch 9 angegebenen Art, weitergebildet durch die Anordnungen nach den Unteransprüchen 10 bis 15.

Bei einem Verfahren zur Versorgung von horizontalen planen Kulturflächen (Rasenflächen, Obst-, Gemüse-, Blumenbeeten bzw. -Plantagen und dergleichen) wird also Wasser von oben und/oder von unten der Kulturfläche zugeführt, so daß der Pflanzenbewuchs der Kulturfläche mit Wasser versorgt wird. Das Wasser wird aber nicht wie bisher in das Abwassernetz abgeleitet, sondern vielmehr gespeichert, und zwar in unmittelbarer Nähe unter der Bepflanzung in einem großflächigen Speicher, der in etwa der Größe der zu versorgenden Kulturfläche entspricht. Der Wasserspiegel des Speichers, welcher vorzugsweise eingestellt oder geregelt werden kann, liegt hierbei in einer Höhe, welche für die besondere Art der Pflanze (Gras oder Blume, etc.) am besten geeignet ist, so daß einerseits vornehmlich durch Kapillarwirkung bzw. Ansteigen von Feuchtigkeit genügend Wasser aus dem Speicher in die Pflanzenwurzel gelangt und andererseits die Pflanzenwurzel überhaupt nicht oder nicht zu tief im Wasser steht, und dadurch ein Verfaulen der Pflanze verhindert wird. Ist der Pflanzenbewuchs der Kulturfläche zu feucht, kann der Wasserspiegel gesenkt und gegebenenfalls das Wasser des Speichers ganz abgelassen werden, um die Pflanzen kurzfristig von unten durch eine angeschlossene Belüftugseinrichtung zu belüften, selbstverständlich in dosierter Form, so daß kein Schaden am Speicher oder an der Kulturfläche entsteht.

Der Wasserspeicher kann insbesondere eine nach oben geführte Entlüftungsleitung aufweisen, um einen Druckausgleich bei einem Befüllen oder Entfluten des Speiches einzurichten.

Mit Vorteil wird jedoch in einer ganz besonderen Ausführungsvariante bewußt auf die vorgenannte Entlüftungsleitung verzichtet, um bei einem Befüllen des Wasserspeichers mit Wasser oder bei einem Entleeren bewußt einen Druckunterschied zwischen Wasserspeicher und Atmosphäre herzustellen, wobei dann Luft großflächig durch die Kulturfläche gedrückt wird, um diesen Druckunterschied auszugleichen. Bei einem Entleeren des Wasserspeichers wird mithin Luft von oben durch die Kulturfläche in das Innere des Wasserspeichers angesaugt, während bei einem Befüllen des Wasserspeichers die Wasserspeicher-Luft über dem Wasserstand in umgekehrter Richtung von unten durch die Kulturfläche nach oben zur Atmosphäre hin gedrückt wird und dort entweicht. Gegebenenfalls kann die durchgedrückte vor einem Entweichen chemisch analysiert werden, um Aufschlüsse über einen möglichen Fäulnisgrad oder dergleichen bei einer "kranken" Kulturfläche zu erhalten.

Insbesondere kann vorgesehen sein, den Wasserstand des Speichers wechselweise zu senken und anzuheben, um Luft selbsttätig durch die Kulturfläche zu "pumpen", d.h. die Kulturfläche zu belüften, wobei dann auch auf ein zusätzliches Belüftungssystem wie Luftkompressoren verzichtet werden kann.

Von Vorteil ist ferner der außerordentlich günstige Wasserverbrauch des Systems bezogen auf die Größe und Art der Kulturfläche und Güte oder Qualität der Pflanzenversorgung. Zum einen wird beispielsweise Regenwasser oder Wasser einer Berieselungsanlage nicht einfach abgelassen, sondern im Bereich der Kulturfläche belassen, um es später weiterverwenden zu können, zum anderen befindet sich der Speicher an einer Stelle, an welcher keine Wasserverdunstung möglich ist. Es wird also praktisch das gesamte von oben oder von der Seite zugeführte Wasser optimal, d.h. ausschließlich für die Bewässerung der Kulturfläche ohne nennenswerte Verluste, genutzt. Die Versorgung der Kulturfläche ist in einem Maße effektiv und automatisch, daß vielfach Menschenbetreuung der Kulturfläche entbehrlich ist.

Eine Kulturflächen-Anordnung, insbesondere Anordnung einer Rasen-Sportanlage in Form eines Fußballplatzes, besitzt also einen unmittelbar unterhalb der Kulturfläche angeordneten großflächigen Wasserspeicher, welcher bevorzugt drei parallele Drainage-Gräben in Längsrichtung des Fußballplatzes aufweist. In den Drainage-Gräben befinden sich Sickerrohre, welche direkt oder über Wasserleitungsrohre mit einem zentralen Wasser-Regelbauwerk verbunden sind.

Das Regelbauwerk umfaßt einen vorzugsweise oberen Wasseranschluß für eine Fremdbefüllung und/oder einen unteren Wasseranschluß mit einem Grundablaßschieber für einen Vorfluter oder externen Wasserspeicher. Im Regelbauwerk befindet sich ein Standrohr für eine Wasserstandsregelung, welches an die externe Leitung des Grundablaßschiebers angeschlossen ist. Zumindest der obere Über-laufrand des Standrohres ist höhenverstellbar, um unterschiedliche Wasserspiegel oder -stände einzurichten.

Der unmittelbar unter der Kulturfläche angeordnete Wasserspeicher ist schichtweise aufgebaut. Er besteht von unten nach oben aus
- einer Wassersperrschicht, vorzugsweise aus Folienmaterial oder bindigem Boden, in welcher zumindest ein vorgenannter Drainage-Graben mit Sickerrohr integriert ist,
- einer Auffüllung des Drainage-Grabens vorzugsweise aus Rollkies, so daß eine im wesentlichen plane obere Fläche entsteht,
- einer Filterschicht, vorzugsweise aus Granitschotter,
- einer Ausgleichsschicht, vorzugsweise einer Rollkiesschicht, und
- einer Sandschicht, vorzugsweise aus gewaschenem Sand, welche an das Oberbodensubstrat (z.B. Humus) der Kulturfläche angrenzt, wobei der Wasserstand eines mit Wasser gefüllten Wasserspeichers vorzugsweise in Höhe der Grenze zwischen der Sandschicht und der Ausgleichsschicht gelegen ist.

Bei wasserentleertem Wasserspeicher kann im Regelbauwerk eine Belüftungseinrichtung, beispielsweise in Form von Luftkompressoren, angeordnet werden, welche an zugeordnete Wasserleitungsrohre der Drainage-Gräben zwecks Belüftung des Wasserspeichers und der Kulturfläche angeschlossen werden können. Nach einer Belüftung des Systems kann die Anlage wieder geflutet und der gewünschte Wasserstand wieder eingestellt werden.

Die Kulturflächen-Anordnung kann auch einzelne "Inseln" aufweisen, welche dem unteren Wasserspeicher nicht zugeordnet sind. Derartige Inseln können beispielsweise bereits bestehender größerer Pflanzenbewuchs (Büsche oder Bäume od. dgl.) sein, dessen tiefe Wurzeln dann außerhalb des Wasserspeichers liegen (und separat mit Wasser versorgt werden müssen).

Die Kulturflächen-Anordnung kann auch eine stufenartige Terrassenbebauung sein, bestehend aus einzelnen horizontalen Kulturflächen, welche unterschiedlich hoch gelegen sind. In diesem Fall ist jeder einzelnen Kulturfläche ein eigener Wasserspeicher und ein eigenes Regelbauwerk zugeordet, die mit einem gemeinsamen Vorfluter oder dergleichen verbunden und/oder an eine gemeinsame Fremdbefüllung angeschlossen sind.

Die Erfindung wird nachfolgend anhand von Ausführungsbeispielen unter Bezugnahme auf die beigefügte Zeichnung näher beschrieben. Es zeigen:
- Fig. 1: eine Kulturflächen-Anordnung in Form eines Fußballplatzes in einer schematischen Draufsicht mit Darstellung des Wasserspeichersystems,
- Fig. 2: die Kulturflächen-Anordnung nach Fig. 1 in einem unterbrochenen Querschnitt längs der Linie I-I,
- Fig. 3: die Kulturflächen-Anordnung nach Fig. 1 in einem unterbochenen Längsschnitt längs der Linie II-II mit Darstellung eines Drainage-Grabens,
- Fig. 4: einen Querschnitt durch einen Bereich der Kulturflächen-Anordnung mit Drainage-Graben in größerer Einzelheit,
- Fig. 5: einen Längsschnitt durch einen Bereich der Kulturflächen-Anordnung mit angeschlossenem Regelbauwerk in größerer Einzelheit,
- Fig. 6: das Regelbauwerk nach Fig. 5 in einer schematischen Draufsicht, und
- Fig. 7: eine andere Kulturflächen-Anordnung in einem Vertikalschnitt.

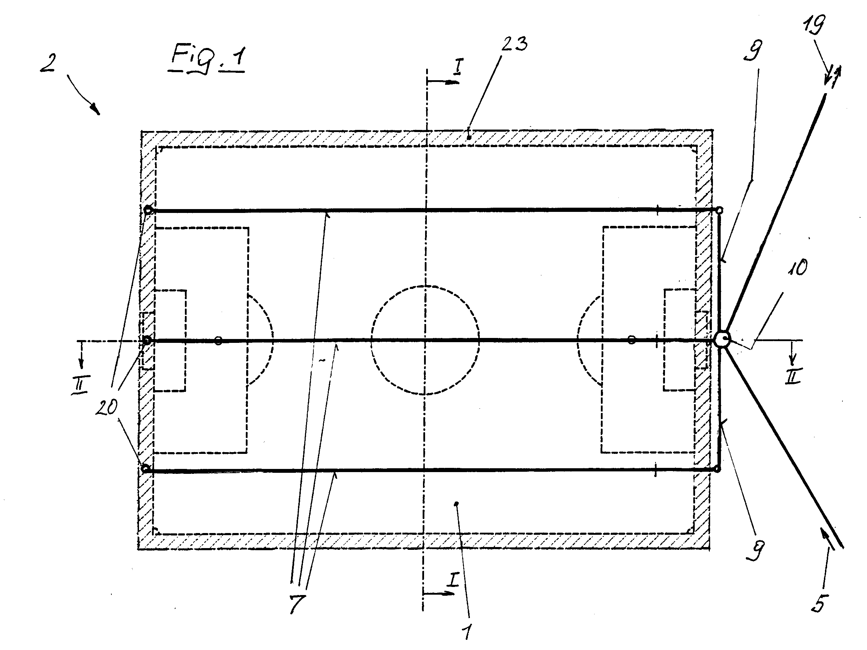

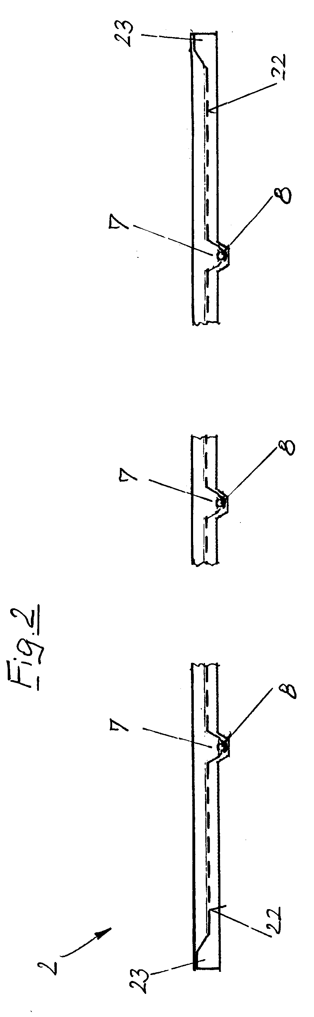

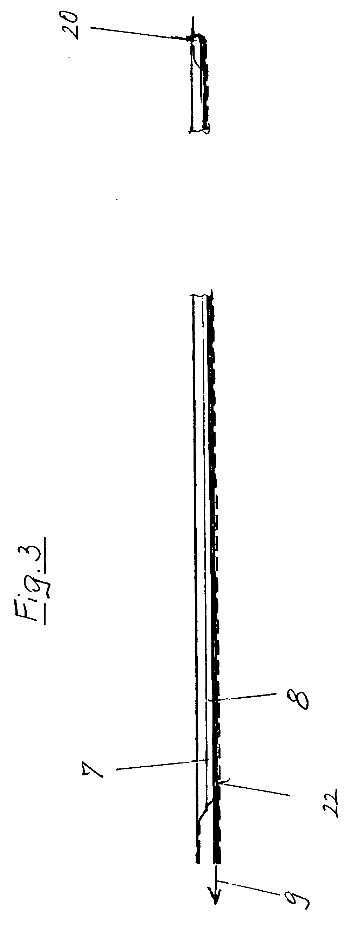

Gemäß den Figuren 1 bis 6 umfaßt eine Kulturflächen-Anordnung in Form eines Fußballfeldes ein Versorgungssystem mit Bewässerungsmöglichkeit einer Kulturfläche 1 in Form eines Rasens.

Das Versorgungssystem besitzt einen großflächigen Wasserspeicher 2 unmittelbar unter dem Rasen, wobei Größe des Speichers etwa der zu versorgenden Kulturfläche 1 entspricht.

Der Wasserspeicher 2 umfaßt drei voneinander beabstandete in Längsrichtung des Fußballfeldes verlaufende Drainage-Gräben 7 mit Sickerrohren 8, welche über Wasserleitungsrohre 9 mit einem außerhalb des eigentlichen Fußballfeldes gelegenen Wasser-Regelbauwerk 10 verbunden sind.

Das Regelbauwerk 10 im Ausführungsbeispiel der Figur 1 befindet sich unmittelbar hinter dem rechten Tor der Fußballfeldes in direkter Verlängerung des mittleren der drei Drainage-Gräben 7, welche links an vertikale Kontrollschächte 20 angeschlossen sind und ein Gefälle von 0,5 % von links nach rechts gemäß Figur 1 aufweisen.

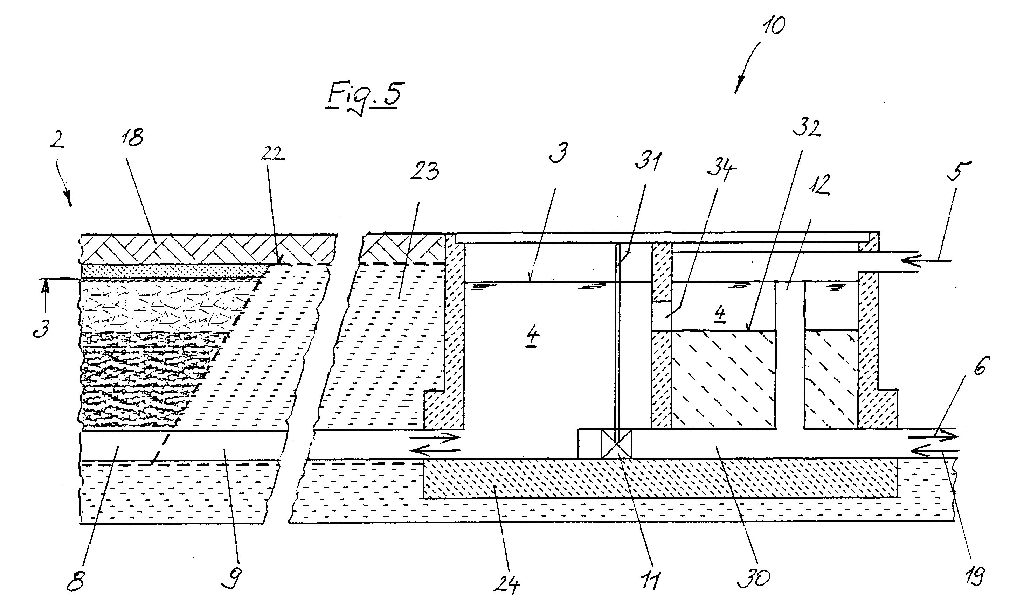

Das Regelbauwerk 10 besitzt einen oberen Wasseranschluß für eine Fremdbefüllung 5 des Regelbauwerkes mit Wasser und einen unteren Wasseranschluß für eine Befüllung 19 von einem externen (nicht veranschaulichten) Wasserspeicher und eine Entleerung zu diesem externen Wasserspeicher oder einem Vorfluter 6, wie dies insbesondere der Figur 5 zu entnehmen ist.

Sickerrohre 8 , PVC-Wasserleitungsrohre 9 sowie Regelbauwerk-Befül lungs- und -Entleerungsrohre haben einen Durchmesser von 150 mm.

Der Wasserspeicher 2 unterhalb des Oberbodensubstrates 18 der Kulturfläche 1 ist wannenartig aufgebaut und besitzt eine untere gestrichelt dargestellte Wassersperrschicht 22, welche durch eine Schicht aus bindigem Boden 13 (Lehm, schluffiger Boden) ausgebildet wird, aber auch eine verschweißte Kunststoff-Folie oder dergleichen sein kann.

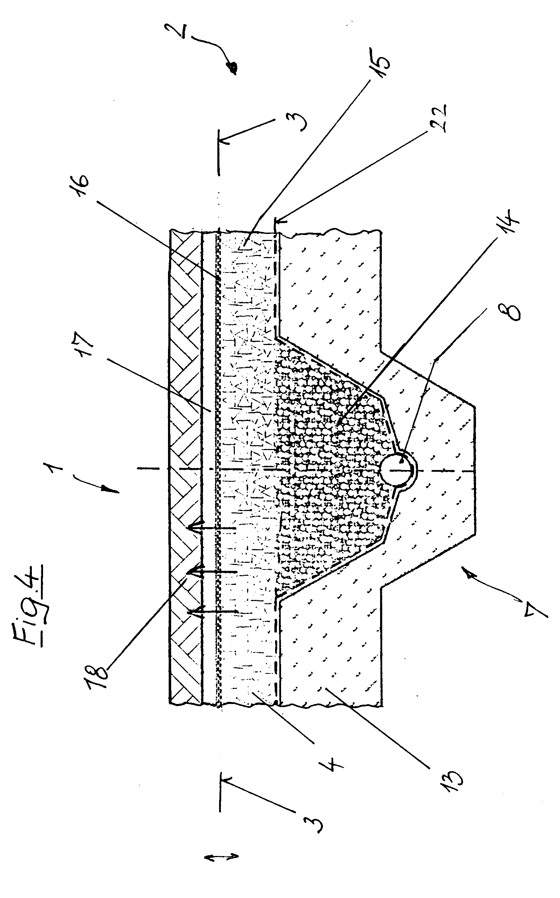

Im bindigen Boden sind die Drainage-Gräben 7 mit den Sickerrohren 8 integriert, und es sind die Drainage-Gräben 7 mit einer Rollkiesschicht mit einer Korngröße zwischen 16 und 32 mm aufgefüllt, so daß eine im wesentliche horizontale Oberfläche des bindigen Bodens zusammen mit den Rollkies-Auffüllungen 14 entsteht, wie dies insbesondere der Figur 4 zu entnehmen ist.

Darüber befindet sich eine ca. 25 cm hohe Filterschicht 15 aus Granitschotter mit einer Korngröße von 8 mm bis 56 mm, an welcher sich oberseitig als Ausgleichsschicht 16 eine ca. 3 cm hohe Rollkiesschicht mit einer Korngröße von 16 mm bis 32 mm anschließt.

Über der Ausgleichschicht 16 ist schließlich eine Sandschicht 17 bzw. eine Schicht aus abschlemmbaren Teilen ausgebildet, welche ca. 7 cm hoch ist und vorzugsweise gewaschener Sand mit einer Körnung von 0 mm bis 4 mm ist. Ausgleichsschicht 14 und Sandschicht 17 sind exakt horizontal. Über der Sandschicht 17 erstreckt sich das Oberbodensubstrat 16, insbesondere eine Humusschicht bzw. steinfreier gedüngter Boden mit einer Dicke von 15 cm, in welcher die Wurzeln der Kulturfläche bzw. des Rasens verwachsen sind.

Im vorgenannten, schichtartig aufgebauten Wasserspeicher 2, dessen Umfangsrand 23 aus bindigem Boden 13 oder dergleichen besteht, befindet sich von oben durch die Kulturfläche 1 oder von unten durch das Regelbauwerk 10 zugeführtes Wasser 4, wobei der Wasserstand 3 durch die Art der Kulturfläche 1 bestimmt ist und entsprechend hoch im Regelbauwerk 10 eingestellt werden kann.

Im Ausführungsbeispiel der Zeichnung befindet sich der Wasserstand 3 an der Grenze zwischen Sandschicht 17 und Ausgleichsschicht 16. Die Wurzeln der Bepflanzung stehen also nicht im Wasser. Die Feuchtigkeit wird der Bepflanzung primär durch Kapillarkraft zugeführt.

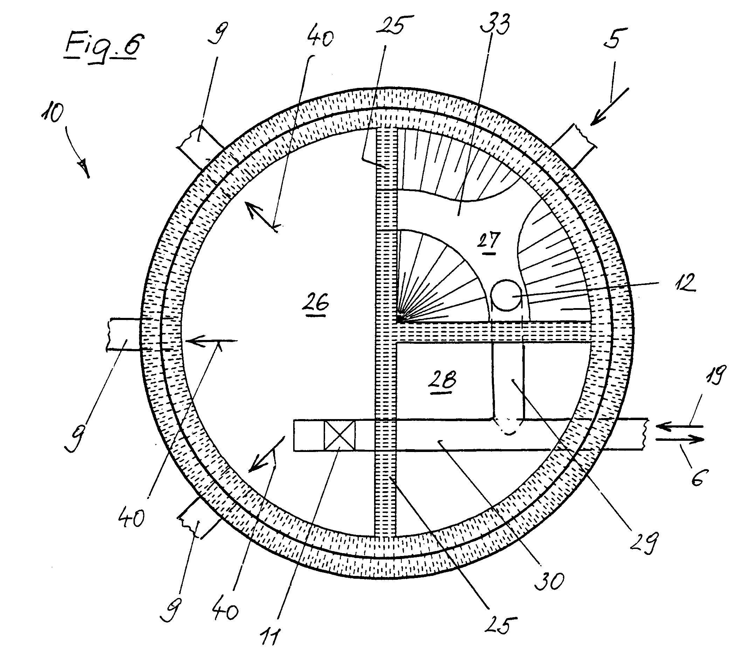

Das insbesondere aus den Figuren 5 und 6 ersichtliche Wasser-Regelbauwerk 10 ist, was das Gehäuse anbelangt, ein Standard-Bauteil des Tiefbaus und im besonderen ein im Durchmesser ca. 2 m großes und ca. 1.2 m hohes Betonrohr mit einem unteren Boden 24.

Das Betonrohr ist durch innere Vertikalwände 25 unterteilt, so daß ein gemäß Figur 6 links gelegener Halbkreis-Raum 26 und auf der anderen Seite zwei Viertelkreis-Räume 27 und 28 gegeben sind. Im Viertelkreis-Raum 27 befindet sich an oberer Stelle der Wasseranschluß für die Fremdbefüllung 5 und in vertikaler Erstreckung ein Standrohr 12 mit einem oberen höhenverstellbaren Überlauf und einer unteren Leitungsverbindung 29 zu einem Regelbauwerk-Bodenrohr 30, welches mit einem externen Vorfluter 6 oder externen Wasserspeicher verbunden ist, sich durch den Viertelkreis-Raum 28 erstreckt und bis in den Halbkreis-Raum 26 hineinreicht, wo auch ein Grundablaßschieber 11 mit vertikaler Betätigungsstange 31 vorgesehen ist, welche bis über den Wasserstand 3 reicht.

Der Viertelkreis-Raum 27 der Fremdbefüllung weist eine Zulaufrinne 33 und einen höher gelegenen Boden 32 mit einem Durchgang 34 zum Halbkreis-Raum 26 auf. Ersichtlich kann mithin beispielsweise durch Fremdbefüllung 5 in das Regelbauwerk 10 zugeführte Wasser in den Raum 27 und in den Raum 26 fließen, und zwar bis in Höhe des oberen Rands des Standrohrs 12, welcher den Wasserstand 3 des Wasserspeichersystems festlegt. Das dem Regelbauwerk zugeführte Wasser füllt nach Durchtritt durch die Wasserleitungsrohre 9 und die Sickerrohre 8 auch den Wasserspeicher 2 unter der Kulturfläche 1.

Ein Wasserablauf aus dem Wasserspeicher 2 und dem Regelbauwerk 10 erfolgt nach Öffnen des Grundablaßschiebers 11 durch das Bodenrohr 30, durch welches auch eine externe Befüllung 19 vorgenommen werden kann.

Das Regelbauwerk 10 kann vollständig wasserentleert werden, und zwar zum Zwecke einer Belüftung 40 der Wasserleitungsrohre 9, um beispielsweise eine überwässerte Kulturfläche 1 zu trocknen, bevor wieder neues Wasser in das System (mit möglicherweise verändertem Wasserstand 3) eingeleitet wird. Für eine Belüftung der Wasserleitungsrohre 9 steigt eine Person in den wasserentleerten Halbkreis-Raum 26 und befestigt an den Durchgängen zu den Rohren 9 Luftkompressoren oder von oben eingeführte Luft-Druckleitungen.

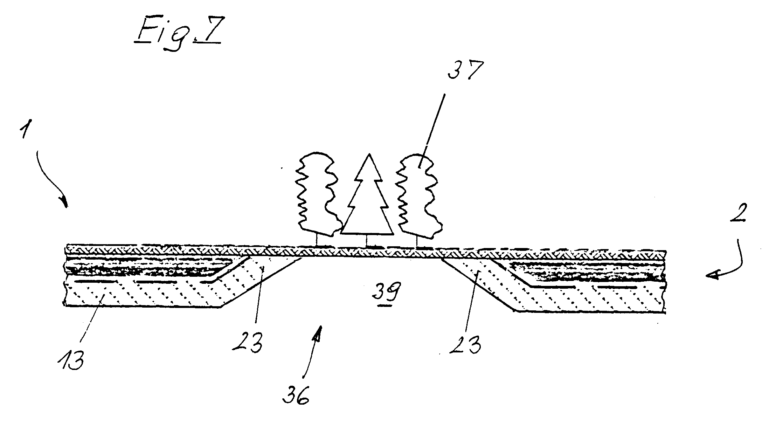

In Figur 7 ist eine weitere Ausführungsform der Kulturfläche 1 gezeigt. Letztere weist Unterbrechungen oder Inseln 36 auf, welche außerhalb eines einzigen Wasserspeichers 2 liegen. Die Inseln sind beispielsweise für bereits bestehenden höheren Planzenbewuchs 37 wie Bäume, Sträucher vorgesehen, deren tiefe Wurzeln außerhalb des Speichers im Naturboden 39 liegen.

## Patentansprüche

1. Verfahren zur Versorgung von horizontalen planen Kulturflächen, insbesondere Bewässerung von Rasen-Sportanlagen für Fußball, Golf od. dgl., wobei der Kulturfläche bedarfsweise Wasser zugeführt wird,
**dadurch gekennzeichnet**,
daß das zugeführte Wasser unmittelbar unterhalb der Kulturfläche (1) großflächig in einem Wasserspeicher (2) gespeichert wird.

2. Verfahren nach Anspruch 1,
**dadurch gekennzeichnet**,
daß der Wasserstand (3) des gespeicherten Wassers (4) eingestellt bzw. geregelt werden kann.

3. Verfahren nach Anspruch 1 oder 2,
**dadurch gekennzeichnet**,
daß das Wasser von oben durch Besprühen oder Beregnen der Kulturfläche (1) dem Wasserspeicher (2) zugeführt wird.

4. Verfahren nach Anspruch 1 bis 3,
**dadurch gekennzeichnet**,
daß das Wasser unterhalb der Kulturfläche (1) von der Seite dem Wasserspeicher (2) zugeführt wird.

5. Verfahren nach Anspruch 4,
**dadurch gekennzeichnet**,
daß das Wasser durch Fremdbefüllung (5) dem Wasserspeicher (2) zugeführt wird.

6. Verfahren nach Anspruch 4,
**dadurch gekennzeichnet**,
daß das Wasser von einem externen Wasserspeicher oder Vorfluter (6) dem Wasserspeicher (2) zugeführt wird.

7. Verfahren nach Anspruch 1 bis 6,
**dadurch gekennzeichnet**,
daß der Wasserspeicher (2) ganz oder teilweise entleert oder entflutet bzw. wasserfrei gemacht wird.

8. Verfahren nach Anspruch 7,
**dadurch gekennzeichnet,**
daß der ganz oder teilweise entleerte Wasserspeicher (2) durch ein zusätzliches, angeschlossenes Belüftungssystem belüftet wird.

9. Kulturflächen-Anordnung, insbesondere Anordnung einer Rasen-Sportanlage, versorgt nach einem Verfahren nach einem der Ansprüche 1 bis 8,
**gekennzeichnet durch**
einen unmittelbar unterhalb der Kulturfläche (1) angeordneten großflächigen Wasserspeicher (2).

10. Anordnung nach Anspruch 9,
**dadurch gekennzeichnet**,
daß der Wasserspeicher (2) zumindest einen Drainage-Graben (7) mit einem Sickerrohr (8) aufweist, welches direkt oder über ein Wasserleitungsrohr (9) mit einem Wasser-Regelbauwerk (10) verbunden ist.

11. Anordnung nach Anspruch 10,
**dadurch gekennzeichnet**,
daß das Regelbauwerk (10) einen vorzugsweise oberen Wasseranschluß für eine Fremdbefüllung (5) und/oder einen vorzugsweise unteren Wasseranschluß mit Grundablaßschieber (11) für einen Vorfluter (6) oder externen Wasserspeicher aufweist.

12. Anordnung nach Anspruch 10 oder 11,
**dadurch gekennzeichnet**,
daß das Regelbauwerk (10) ein Standrohr (12) für eine Wasserstandsregelung aufweist.

13. Anordnung nach Anspruch 9 bis 12,
**dadurch gekennzeichnet**,
der Wasserspeicher (2) schichtweise aufgebaut ist, bestehend von unten nach oben aus
- einer Wassersperrschicht (22), vorzugsweise aus Folienmaterial oder bindigem Boden (13), in welcher zumindest ein Drainage-Graben (7) mit Sickerrohr (8) integriert ist,
- einer Auffüllung (14) des Drainage-Grabens (7) vorzugsweise aus Rollkies, so daß eine im wesentlichen plane obere Fläche entsteht,
- einer Filterschicht (15), vorzugsweise aus Granitschotter
- einer Ausgleichsschicht (16), vorzugsweise aus Rollkies, und
- einer Sandschicht (17), vorzugsweise aus gewaschenem Sand, welche an das Oberbodensubstrat (18) der Kulturfläche (1) angrenzt, wobei der Wasserstand (3) eines mit Wasser gefüllten Wasserspeichers (2) vorzugsweise in Höhe der Grenze Sandschicht (17) / Ausgleichsschicht (16) gelegen ist.

14. Anordnung nach Anspruch 13,
**dadurch gekennzeichnet**,
daß bei wasser-entleertem Wasserspeicher (2) im Regelbauwerk (10) eine Belüftungseinrichtung vorgesehen ist, welche an das Wasserleitungsrohr (9) zwecks Belüftung des Wasserspeichers (2) und der Kulturfläche (1) anschließbar ist.

15. Anordnung nach Anspruch 9 bis 14,
**dadurch gekennzeichnet**,
daß mehrere in unterschiedlichen Höhen angeordnete Kulturflächen (1) mit zugeordneten Wasserspeichern (2) und Regelbauwerken (10) vorgesehen sind.
